# EUROPEAN PATENT APPLICATION

(11) **EP 4 579 698 A2**
(43) Date of publication of application: **02.07.2025**
(21) Application number: 24219130.2
(22) Date of filing: 11.12.2024
(51) Int. Cl.: H01G 4/005, H01G 4/30

(54) **MULTI-LAYER ELECTRONIC COMPONENT WITH REINFORCEMENT PATTERNS OR SHORT DUMMY ELECTRODES TO PREVENT CORNER CRACKS**

(30) Priority: 29.12.2023 KR 20230196339
(71) Applicant: Samsung Electro-Mechanics Co., Ltd., Gyeonggi-do (KR)
(72) Inventor: Hwang, Jung Wun, Suwon-si, Gyeonggi-do (KR); Lee, Chae Dong, Suwon-si, Gyeonggi-do (KR)
(74) Representative: Grünecker Patent- und Rechtsanwälte PartG mbB

(57) **Abstract**

A multilayer electronic component (100) comprising: a body (110) including a plurality of dielectric layers (111), a first internal electrode (121), a second internal electrode (122), and a reinforcing pattern (123, 124); and an external electrode (130) disposed on the body (110), wherein the first and second internal electrodes (121, 122) are disposed alternately with the dielectric layer (111) therebetween in a first direction (T), and when a region of the body (110) in which the first and second internal electrodes (121, 122) overlap in the first direction (T) is a capacitance formation portion (Ac), the reinforcing pattern (123, 124) is disposed on one surface and the other surface of the capacitance formation portion (Ac) in the first direction (T), when a direction, perpendicular to the first direction (T), is a second direction (L), and a direction, perpendicular to the first direction (T) and the second direction (L), is a third direction (W), the reinforcing pattern (123, 124) is disposed to contact a surface of the body (110) in the second direction (L) and is spaced apart from each other in the second direction (L), and when the reinforcing pattern (123, 124) includes four parts in the third direction (W) from one end of the reinforcing pattern in the third direction (W) to the other end of the reinforcing pattern (123, 124) in the third direction (W),

- a length of the reinforcing pattern (123, 124) at a 1/4 point in the second direction (L) is greater than a length of the reinforcing pattern (123, 124) at a 1/2 point in the second direction (L) and

- a length of the reinforcing pattern (123, 124) at a 3/4 point in the second direction (L) is greater than the length of the reinforcing pattern (123, 124) at the 1/2 point in the second direction (L).

Further, the reinforcing pattern (i.e. dummy electrodes) does not overlap the capacitance formation portion (Ac) in the first direction (T).

## Description

### CROSS-REFERENCE TO RELATED APPLICATION(S)

This application claims benefit of priority to Korean Patent Application No. 10-2023-0196339 filed on December 29, 2023 in the Korean Intellectual Property Office, the disclosure of which is incorporated herein by reference in its entirety.

### TECHNICAL FIELD

The present disclosure relates to a multilayer electronic component.

Multilayer ceramic capacitors (MLCCs), multilayer electronic components, are chip-type condensers mounted on the printed circuit boards of various electronic products including display devices, such as liquid crystal displays (LCDs) and plasma display panels (PDPs), computers, smartphones, cell phones, circuits, such as on-board charger (OBC) DC-DC converters of electric vehicles, and the like, to charge or discharge electricity.

MLCCs, having advantages such as a small size, high capacitance, ease of mounting, or the like, may be used as components in various electronic devices. As various electronic devices, such as computers and mobile devices, become smaller and have higher output, demand for miniaturization and high capacitance of MLCCs has increased.

External electrodes of multilayer ceramic capacitors may be formed to be thin at the corners thereof, as compared to the center of a body surface. In this case, the thin external electrodes may become a path for external moisture to penetrate, which may reduce the moisture resistance reliability of multilayer ceramic capacitors.

In addition, since the center of the body corresponds to a region in which internal electrodes having different polarities overlap in a stacking direction, a step difference may occur during a stacking and compressing process. In particular, a step difference may occur in a capacitance formation portion in which internal electrodes overlap and a margin portion forming the side of the capacitance formation portion. In addition, since the center region of the body is the region in which the internal electrodes overlap, a clumping phenomenon may occur when undergoing a heat treatment process, such as sintering.

Therefore, structural improvement is required to suppress the deterioration of moisture resistance reliability of multilayer ceramic capacitors and to alleviate the step difference.

### SUMMARY

An aspect of the present disclosure is to suppress the deterioration of moisture resistance reliability of a multilayer electronic component that may occur due to an external electrode formed to be relatively thin at the corner of a body.

Another aspect of the present disclosure is to alleviate a step difference occurring according to the stacking degree of internal electrodes in a capacitance formation portion and a margin portion.

However, the problem to be solved by the present disclosure is not limited to the aforementioned contents and may be more easily understood in the process of explaining specific exemplary embodiments of the present disclosure.

According to an aspect of the present disclosure, a multilayer electronic component includes: a body including a plurality of dielectric layers, a first internal electrode, a second internal electrode, and a reinforcing pattern; and an external electrode disposed on the body. The first and second internal electrodes are disposed alternately with the dielectric layer therebetween in a first direction. When a region of the body in which the first and second internal electrodes overlap in the first direction is a capacitance formation portion, the reinforcing pattern is disposed on one surface and the other surface of the capacitance formation portion in the first direction. A direction, perpendicular to the first direction, is a second direction, and a direction, perpendicular to the first direction and the second direction, is a third direction, the reinforcing pattern is disposed to contact a surface of the body in the second direction and is spaced apart from each other in the second direction. The reinforcing pattern includes four parts in the third direction from one end of the reinforcing pattern in the third direction to the other end of the reinforcing pattern in the third direction, a length of the reinforcing pattern at a 1/4 point in the second direction is greater than a length of the reinforcing pattern at a 1/2 point in the second direction and a length of the reinforcing pattern at a 3/4 point in the second direction is greater than the length of the reinforcing pattern at the 1/2 point in the second direction.

According to an aspect of the present disclosure, a multilayer electronic component includes: a body including a plurality of dielectric layers, a first internal electrode, a second internal electrode, and a reinforcing pattern; and an external electrode disposed on the body. The first and second internal electrodes are disposed alternately with the dielectric layer therebetween in a first direction. When a region of the body in which the first and second internal electrodes overlap in the first direction is a capacitance formation portion, the reinforcing pattern is disposed on one surface and the other surface of the capacitance formation portion in the first direction. A direction, perpendicular to the first direction, is a second direction, and a direction, perpendicular to the first direction and the second direction, is a third direction, the reinforcing pattern is disposed to contact a surface of the body in the second direction. A length of the reinforcing pattern, in the second direction, decreases from and an edge portion of the reinforcing pattern towards a central portion of the reinforcing pattern in the third direction.

### BRIEF DESCRIPTION OF DRAWINGS

The and other aspects, features, and advantages of the present disclosure will be more clearly understood from the following detailed description, taken in conjunction with the accompanying drawings, in which:
FIG. 1 is a perspective view schematically illustrating a multilayer electronic component according to an exemplary embodiment of the present invention;
FIG. 2 is a cross-sectional view taken along line I-I' of FIG. 1;
FIG. 3 is a cross-sectional view taken along line II-II' of FIG. 1;
FIG. 4 is a cross-sectional view taken along line III-III' of FIG. 1;
FIG. 5 is a cross-sectional view taken along line IV-IV' of FIG. 1;
FIG. 6 is a cross-sectional view taken along line II-II' of FIG. 1 in a multilayer electronic component according to an exemplary embodiment;
FIG. 7 is a cross-sectional view taken along line II-II' of FIG. 1 in a multilayer electronic component according to an exemplary embodiment;
FIGS. 8A and 8B are plan views illustrating a structure of an internal electrode according to an exemplary embodiment;
FIG. 9 is a plan view illustrating a structure of a reinforcing pattern according to an exemplary embodiment; and
FIGS. 10A and 10B are plan views illustrating a structure of a reinforcing pattern according to an exemplary embodiment.

### DETAILED DESCRIPTION

Hereinafter, exemplary embodiments of the present inventive concept will be described in detail with reference to the accompanying drawings. The inventive concept may, however, be exemplified in many different forms and should not be construed as being limited to the specific exemplary embodiments set forth herein. Rather, these exemplary embodiments are provided so that this disclosure will be thorough and complete, and will fully convey the scope of the inventive concept to those skilled in the art. In the drawings, the shapes and dimensions of elements may be exaggerated for clarity, and the same reference numerals will be used throughout to designate the same or like elements.

To clarify the present disclosure, portions irrespective of description are omitted and like numbers refer to like elements throughout the specification, and in the drawings, the thickness of layers, films, panels, regions, etc., are exaggerated for clarity. Also, in the drawings, like reference numerals refer to like elements although they are illustrated in different drawings. Throughout the specification, unless explicitly described to the contrary, the word "comprise" and variations, such as "comprises" or "comprising," will be understood to imply the inclusion of stated elements but not the exclusion of any other elements.

In the drawing, a first direction may be defined as a stacking direction or thickness (T) direction, a second direction may be defined as a length (L) direction, and a third direction may be defined as a width (W) direction.

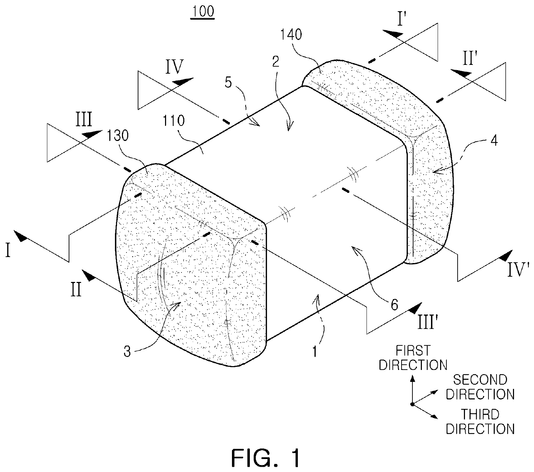

FIG. 1 is a perspective view schematically illustrating a multilayer electronic component according to an exemplary embodiment of the present invention.

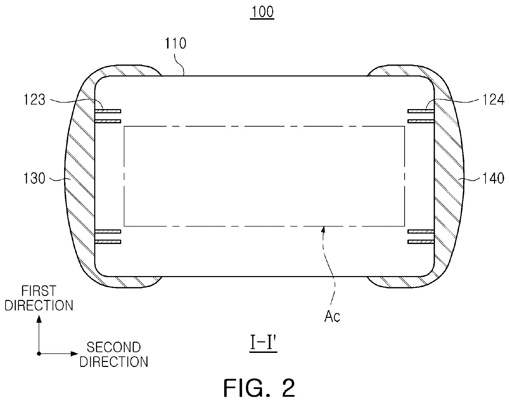

FIG. 2 is a cross-sectional view taken along line I-I' of FIG. 1.

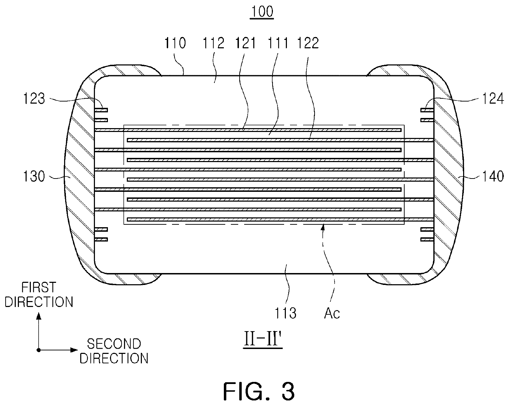

FIG. 3 is a cross-sectional view taken along line II-II' of FIG. 1.

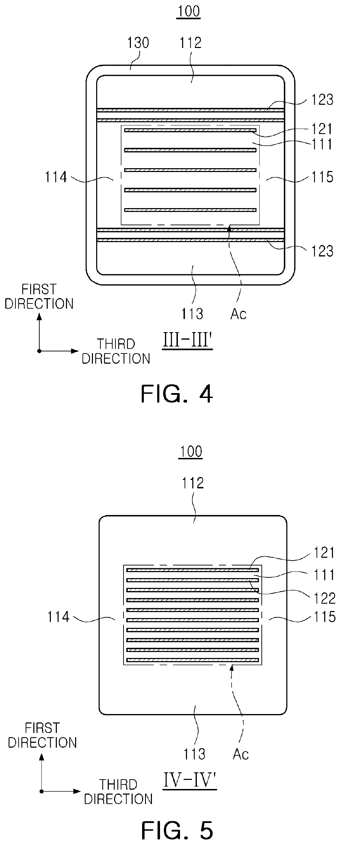

FIG. 4 is a cross-sectional view taken along line III-III' of FIG. 1.

FIG. 5 is a cross-sectional view taken along line IV-IV' of FIG. 1.

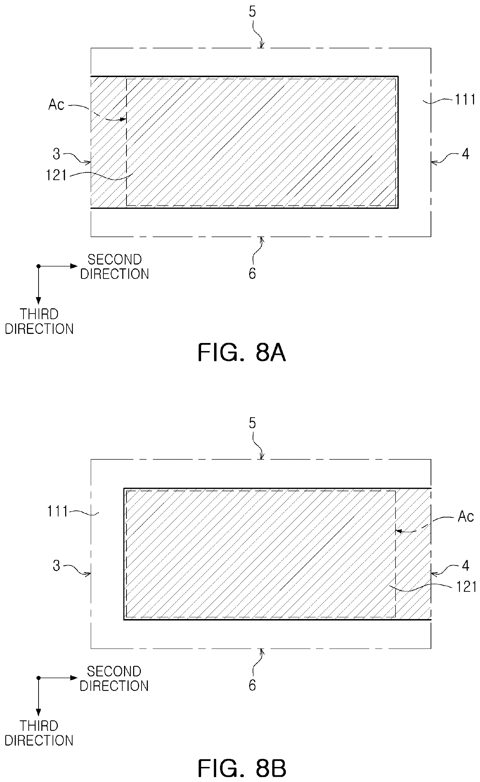

FIGS. 8A and 8B are plan views illustrating a structure of an internal electrode according to an exemplary embodiment.

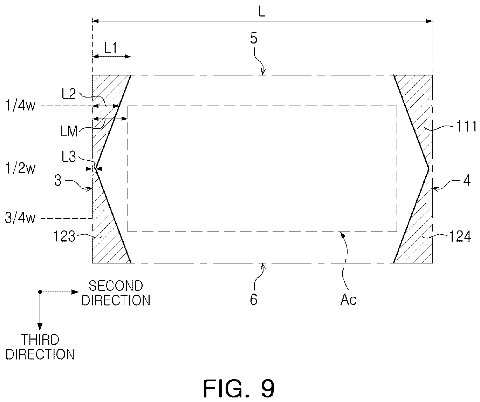

FIG. 9 is a plan view illustrating a structure of a reinforcing pattern according to an exemplary embodiment.

Hereinafter, a multilayer electronic component 100 according to an exemplary embodiment in the present disclosure will be described in detail with reference to FIGS. 1 to 5 and FIGS. 8 and 9. In addition, a multilayer ceramic capacitor (MLCC) is described as an example of a multilayer electronic component, but the present disclosure is not limited thereto and may be applied to various multilayer electronic components using ceramic materials, such as inductors, piezoelectric elements, varistors, or thermistors.

The multilayer electronic component 100 according to an exemplary embodiment in the present disclosure includes: a body 110 including a plurality of dielectric layers 111, a first internal electrode 121, a second internal electrode 122, and a reinforcing pattern 123/124; and an external electrode 130/140 disposed on the body. The first and second internal electrodes 121 and 122 are alternately arranged in the first direction with the dielectric layer 111 therebetween, and when a region of the body in which the first and second internal electrodes 121 and 122 overlap in the first direction is referred to as a capacitance formation portion Ac, the reinforcing pattern 123/124 is disposed on one surface and the other surface of the capacitance formation portion Ac in the first direction, and when a direction, perpendicular to the first direction, is referred to as a second direction and a direction, perpendicular to the first direction and the second direction, is referred to as a third direction, the reinforcing patterns 123/124 contact surfaces of the body 110 opposing in the second direction, respectively, and are arranged to be spaced apart from each other in the second direction, and when the reinforcing pattern 123/124 is divided into four parts in the third direction from one end of the reinforcing pattern 123/124 in the third direction to the other end thereof in the third direction, a length of the reinforcing pattern 123/124 in the second direction at a 1/4 point is greater than a length of the reinforcing pattern 123/124 in the second direction at a 1/2 point, and a length of the reinforcing pattern 123/124 in the second direction at a 3/4 point may be greater than a length of the reinforcing pattern 123/124 in the second direction at the 1/2 point.

Hereinafter, each component of the multilayer electronic component 100 will be described in detail.

The body 110 may include a plurality of dielectric layers 111, a first internal electrode 121, a second internal electrode 122, and reinforcing patterns 123 and 124.

Although a specific shape of the body 110 is not particularly limited, as shown, the body 110 may have a hexahedral shape or a similar shape. Due to the shrinkage of ceramic powder included in the body 110 during a sintering process, the body 110 may not have a perfectly straight hexahedral shape but may have a substantially hexahedral shape.

The body 110 may include the first and second surfaces 1 and 2 opposing each other in the first direction, the third and fourth surfaces 3 and 4 connected to the first and second surfaces 1 and 2 and opposing each other in the second direction, and the fifth and sixth surfaces 5 and 6 connected to the first and second surfaces 1 and 2, connected to the third and fourth surfaces 3 and 4, and opposing each other in the third direction.

As a margin region in which the internal electrodes 121 and 122 are not disposed overlaps the dielectric layer 111, a step difference occurs due to the thickness of the internal electrodes 121 and 122 and the corner connecting the first surface and the third to fifth surfaces and/or the corner connecting the second surface and the third to fifth surfaces may have a shape contracted toward the center of the body 110 in the first direction when viewed from the first surface or the second surface. Alternatively, due to shrinkage behavior during the sintering process of the body, the corner connecting the first surface 1 and the third to sixth surfaces 3, 4, 5, and 6 and/or the corner connecting the second surface 2 and the third to sixth surfaces 3, 4, 5, and 6 may have a shape contracted toward the center of the body 110 in the first direction when viewed from the first surface or the second surface. Alternatively, in order to prevent chipping defects, etc., the corner connecting the first surface and the third to sixth surfaces and/or the corner connecting the second surface and the third to sixth surfaces may have a round shape by performing a separate process to round the corner connecting each surface of the body 110.

Meanwhile, in order to suppress a step difference caused by the internal electrodes 121 and 122, when the internal electrodes are cut to be exposed to the fifth and sixth surfaces 5 and 6 of the body after stacking, and then a single dielectric layer or two or more dielectric layers are stacked in the third direction (the width direction) on both sides of the capacitance formation portion Ac to form the margin portions 114 and 115, the portion connecting the first surface and the fifth and sixth surfaces and the portion connecting the second surface and the fifth and sixth surfaces may not have a contracted form.

The plurality of dielectric layers 111 forming the body 110 are in a sintered state, and adjacent dielectric layers 111 may be integrated such that boundaries therebetween may not be readily apparent without using a scanning electron microscope (SEM). The number of stacked dielectric layers is not particularly limited and may be determined in consideration of the size of the multilayer electronic component. For example, the body may be formed by stacking 400 or more dielectric layers.

The dielectric layer 111 may be formed by preparing a ceramic slurry including ceramic powder, an organic solvent, and a binder, applying and drying the slurry on a carrier film to prepare a ceramic green sheet, and then sintering the ceramic green sheet. The ceramic powder is not particularly limited as long as it may obtain sufficient capacitance, but, for example, a barium titanate-based (BaTiO₃) powder may be used as the ceramic powder. For a more specific example, the ceramic powder may be one or more of BaTiO₃, (Ba₁₋ₓCaₓ)TiO₃ (0≤x≤1), Ba(Ti_{1-y}Ca_{y})O₃ (0≤y≤1), (Ba₁₋ₓCaₓ) (Ti_{1-y}Zr_{y})O₃ (0≤x≤1, 0≤y≤1) and Ba(Ti_{1-y}Zr_{y})O₃ (0≤y≤1).

According to the present disclosure, even when the thickness of a plurality of dielectric layers 111 is thin, a high temperature load lifespan may be prevented from deteriorating, and when the thickness of the dielectric layers is thick, the high temperature load lifespan may be further improved. Therefore, an average thickness td of the dielectric layers 111 is not particularly limited and may be arbitrarily set according to desired characteristics or purposes. For example, the average thickness of the dielectric layers 111 may be 300 nm or more and 10 um or less. In addition, an average thickness of at least one of the plurality of dielectric layers 111 may be 300 nm or more and 10 um or less.

Here, the average thickness of the dielectric layer 111 may refer to an average size of the dielectric layer 111 in the first direction disposed between the internal electrodes 121 and 122. The average thickness of the dielectric layer 111 may be measured by scanning a cross-section of the body 110 with a scanning electron microscope (SEM) at 10,000x magnification in the first and second directions. More specifically, thicknesses at a plurality of points of one dielectric layer 111, for example, 30 equally spaced points in the second direction, may be measured and an average value thereof may be measured. The 30 equally spaced points may be designated in the capacitance formation portion Ac described below. In addition, if the average value measurement is extended to 10 dielectric layers 111 and average values thereof are measured, the average thickness of the dielectric layer 111 may be further generalized.

The internal electrodes 121 and 122 may be alternately arranged with the dielectric layer 111 in the first direction.

The internal electrodes 121 and 122 may include first and second internal electrodes 121 and 122. The first and second internal electrodes 121 and 122 may be alternately disposed to face each other with the dielectric layer 111 constituting the body 110 interposed therebetween and may be respectively connected to the third and fourth surfaces 3 and 4 of the body 110. Specifically, one end of the first internal electrode 121 may be connected to the third surface 3, and one end of the second internal electrode 122 may be connected to the fourth surface 4. That is, in an exemplary embodiment, the internal electrodes 121 and 122 may contact the third surface 3 or the fourth surface 4.

As shown in FIG. 3, the first internal electrode 121 may be connected to the third surface 3 and spaced from the fourth surface 4, and the second internal electrode 122 may be connected to the fourth surface 4 and spaced from the third surface 3. Accordingly, the first internal electrode 121 may not be connected to the second external electrode 140 and may be connected to the first external electrode 130, and the second internal electrode 122 may not be connected to the first external electrode 130 and may be connected to the second external electrode 140.

A material for forming the internal electrodes 121 and 122 is not particularly limited, and a material having excellent electrical conductivity may be used. For example, the internal electrodes 121 and 122 may include at least one of nickel (Ni), copper (Cu), palladium (Pd), silver (Ag), gold (Au), platinum (Pt), tin (Sn), tungsten (W), titanium (Ti), or alloys thereof.

In addition, the internal electrodes 121 and 122 may be formed by printing a conductive paste for internal electrodes including at least one of nickel (Ni), copper (Cu), palladium (Pd), silver (Ag), gold (Au), platinum (Pt), tin (Sn), tungsten (W), titanium (Ti), or alloys thereof on a ceramic green sheet. A printing method of the conductive paste for internal electrodes may be a screen printing method or a gravure printing method, but the present disclosure is not limited thereto.

The average thickness of the internal electrodes 121 and 122 is not particularly limited and may be arbitrarily set according to desired characteristics or purposes. For a specific example, the average thickness of the internal electrodes 121 and 122 may be 300 nm or more and 10 um or less. In addition, the average thickness of at least one of the plurality of internal electrodes 121 and 122 may be 300 nm or more and 10 um or less.

The average thickness of the internal electrodes 121 and 122 is obtained as follows. In an image of a cross-section of the body 110 in length and thickness directions (L-T) taken at the center of the body 110 in the width direction scanned with a scanning electron microscope, a total of five internal electrode layers including two upper layers and two lower layers based on one internal electrode layer at a point at which a central line of the body in the length direction and a central line of the body in the thickness direction meet are extracted among the internal electrode layers, five points including two left points and two right points based on one reference point are then determined at equal intervals based on the point at which the central line of the body in the length direction and the central line of the body in the thickness direction meet, and thereafter, thicknesses at the respective points are measured and averaged.

Referring to FIGS. 3 and 5, the body 110 may include a capacitance formation portion Ac, which is a region in which the first and second internal electrodes 121 and 122 overlap in the first direction. In addition, the capacitance formation portion Ac is a portion that contributes to formation of capacitance of the capacitor and may be formed by repeatedly stacking a plurality of first and second internal electrodes 121 and 122 with the dielectric layer 111 interposed therebetween.

Referring to FIGS. 3 and 5, a region between a cross-section of the capacitance formation portion Ac in the second direction and a surface of the body 110 facing in the second direction may be referred to as a length-margin portion. The length-margin portion may be a region including one of the internal electrodes 121 and 122.

Referring to FIGS. 3 to 5, cover regions 112 and 113 may be disposed on one surface and the other surface of the capacitance formation portion Ac in the first direction.

The cover portions 112 and 113 may be formed by stacking a single dielectric layer or two or more dielectric layers in the thickness direction on upper and lower surfaces of the capacitance formation portion Ac and may basically serve to prevent damage to the internal electrodes due to physical or chemical stress.

The cover portions 112 and 113 does not include an internal electrode and may include the same material as the dielectric layer 111. For example, the cover portions 112 and 113 may include a ceramic material, for example, a barium titanate (BaTiO₃)-based ceramic material.

Meanwhile, the thickness of the cover portions 112 and 113 is not particularly limited. However, in order to more easily achieve miniaturization and high capacitance of the multilayer electronic component, the thickness of the cover portions 112 and 113 may be 15 um or less.

The average thickness of the cover portions 112 and 113 may refer to a size in the first direction and may be an average value of sizes of the cover portions 112 and 113 in the first direction measured at five equally spaced points above or below the capacitance formation portion Ac.

Referring to FIGS. 4 and 5, margin portions 114 and 115 may be disposed on one side and the other side of the third direction of the capacitance formation portion Ac.

The margin portions 114 and 115 may include a first margin portion 114 disposed on the fifth surface 5 of the body 110 and a second margin portion 115 disposed on the sixth surface 6. That is, the margin portions 114 and 115 may be disposed on both end surfaces of the ceramic body 110 in the width direction.

As shown in FIG. 5, the margin portions 114 and 115 may refer to a region between both ends of the first and second internal electrodes 121 and 122 and a boundary surface of the body 110 in a cross-section of the body 110 taken in the width-thickness (W-T) direction.

The margin portions 114 and 115 may basically play a role in preventing damage to the internal electrodes due to physical or chemical stress.

The margin portions 114 and 115 may be formed by applying a conductive paste to form internal electrodes, except for the region in which the margin portion is to be formed on the ceramic green sheet.

In addition, in order to suppress a step difference caused by the internal electrodes 121 and 122, after stacking, the internal electrodes may be cut to be exposed to the fifth and sixth surfaces 5 and 6 of the body, and then a single dielectric layer or two or more dielectric layers may be stacked on both surfaces of the capacitance formation portion Ac in the third direction (the width direction) to form the margin portions 114 and 115.

Meanwhile, the width of the margin portions 114 and 115 is not particularly limited. For example, the width of the margin portions 114 and 115 may be 5 to 300 um. However, in order to more easily achieve miniaturization and high capacitance of the multilayer electronic component, an average width of the margin portions 114 and 115 may be 15 um or less.

The average width of the margin portions 114 and 115 may refer to an average size in the third direction of a region in which the internal electrode is spaced apart from the fifth surface and an average size in the third direction of a region in which the internal electrode is spaced apart from the sixth surface and may be an average value of the sizes in the third direction of the margin portions 114 and 115 measured at five equally spaced points on the side surface of the capacitance formation portion Ac.

Therefore, in an exemplary embodiment, the average size in the third direction of the region in which the internal electrodes 121 and 122 are spaced apart from the fifth and sixth surfaces may be 15 um or less, respectively.

Referring to FIGS. 2 to 5, reinforcing patterns 123 and 124 may be disposed on one surface and the other surface of the capacitance formation portion Ac in the first direction. The reinforcing patterns 123 and 124 may be formed continuously in the third direction and may be in contact with the third surface 3 and the fourth surface 4, which are surfaces facing in the second direction of the body 110, respectively. Here, the reinforcing pattern 123 in contact with the third surface 3 and the reinforcing pattern 124 in contact with the fourth surface 4 may be disposed to be spaced apart from each other in the second direction.

A material forming the reinforcing patterns 123 and 124 is not particularly limited, and a material having excellent electrical conductivity may be used. For example, the reinforcing patterns 123 and 124 may include one or more of nickel (Ni), copper (Cu), palladium (Pd), silver (Ag), gold (Au), platinum (Pt), tin (Sn), tungsten (W), titanium (Ti), and alloys thereof.

The external electrodes 130 and 140 may be disposed on the body 110. Specifically, the external electrodes 130 and 140 may be disposed on the third and fourth surfaces 3 and 4 of the body 110, respectively, and may include first and second external electrodes 130 and 140 connected to the first and second internal electrodes 121 and 122, respectively.

In the present exemplary embodiment, a structure in which the multilayer electronic component 100 has two external electrodes 130 and 140 is described, but the number or shape of the external electrodes 130 and 140 may be changed depending on the shape of the internal electrodes 121 and 122 or other purposes.

Meanwhile, the external electrodes 130 and 140 may be formed using any material having electrical conductivity, such as metal, and a specific material may be determined in consideration of electrical characteristics, structural stability, etc., and may further have a multilayer structure.

For example, the external electrodes 130 and 140 may include an electrode layer disposed on the body 110 and a plating layer formed on the electrode layer.

For a more specific example of the electrode layer, the electrode layer may be a sintered electrode including a conductive metal and glass or a resin-based electrode including a conductive metal and resin.

In addition, the electrode layer may be in the form of a sintering electrode and a resin-based electrode being sequentially formed on the body. In addition, the electrode layer may be formed by transferring a sheet including a conductive metal onto the body or may be formed by transferring a sheet including a conductive metal onto a sintered electrode. In addition, the electrode layer may be formed as a plating layer or may be a layer formed using a deposition method, such as a sputtering method or atomic layer deposition (ALD).

A material having excellent electrical conductivity may be used as the conductive metal included in the electrode layer and is not particularly limited. For example, the conductive metal may be at least one of nickel (Ni), copper (Cu), or alloys thereof.

The plating layer plays a role in improving the mounting characteristics. The type of the plating layer is not particularly limited and may be a plating layer including at least one of Ni, Sn, Pd, or alloys thereof and may include a plurality of layers.

For a more specific example of the plating layer, the plating layer may be a Ni plating layer or a Sn plating layer and may be in a form in which a Ni plating layer and a Sn plating layer are sequentially formed on an electrode layer or may be in a form in which a Sn plating layer, a Ni plating layer, and a Sn plating layer are sequentially formed. In addition, the plating layer may include a plurality of Ni plating layers and/or a plurality of Sn plating layers. In addition, the plating layer may be in a form in which a Ni plating layer and a Pd plating layer are sequentially formed on an electrode layer.

The size of the multilayer electronic component 100 may not be particularly limited. Since the present disclosure is advantageous in miniaturization and high capacitance, the present disclosure may be applied to the size of small IT products, and since high reliability is secured in various environments, the present disclosure may be applied to the size of automotive electrical products that require high reliability.

Meanwhile, the external electrode of the related art general multilayer electronic component may be formed to be thin at a corner portion compared to the center of the body surface. In this case, the thinner portion of the external electrode may become a path for external moisture penetration, so the moisture resistance reliability may be reduced.

In addition, since the center of the body corresponds to a region in which the internal electrodes having different polarities overlap in the stacking direction, a step difference may occur during the stacking and compressing process. In particular, a step difference may occur between the capacitance formation portion in which the internal electrodes overlap and the margin portion forming the side surface of the capacitance formation portion. In addition, since the center of the body is a region in which the internal electrodes overlap, a clumping phenomenon may occur when undergoing a heat treatment process, such as sintering.

Accordingly, in an exemplary embodiment in the present disclosure, reinforcing patterns 123 and 124 may be disposed on one surface and the other surface of the capacitance formation portion Ac in the first direction and the reinforcing patterns 123 and 124 are disposed to be in contact with the surfaces 3 and 4 facing each other in the second direction of the body 110 and are spaced apart from each other in the second direction. When the reinforcing patterns 123 and 124 are divided into four parts in the third direction from one end thereof in the third direction to the other end thereof in the third direction, a length of the reinforcing patterns 123 and 124 at a 1/4 point (1/4w) in the second direction may be adjusted to be greater than a length of the reinforcing patterns 123 and 124 at a 1/2 point (1/2w) in the second direction, and a length of the reinforcing patterns 123 and 124 at a 3/4 point (3/4w) in the second direction may be adjusted to be greater than a length of the reinforcing patterns 123 and 124 at the 1/2 point (1/2w) in the second direction, thereby improving the moisture resistance reliability of the multilayer electronic component, alleviating a step difference, and alleviating the clumping phenomenon at the center of the internal electrodes as well.

Referring to FIG. 9, when the reinforcing patterns 123 and 124 are divided into four parts in the third direction from one end thereof in the third direction to the other end thereof in the third direction, a length of the reinforcing patterns 123 and 124 at a 1/4 point (1/4w) in the second direction may be adjusted to be greater than a length of the reinforcing patterns 123 and 124 at a 1/2 point (1/2w) in the second direction, and a length of the reinforcing patterns 123 and 124 at a 3/4 point (3/4w) in the second direction may be adjusted to be greater than a length of the reinforcing patterns 123 and 124 at the 1/2 point (1/2w) in the second direction, the reinforcing patterns 123 and 124 may have a shape in which the length of the reinforcing patterns 123 and 124 in the second direction may increase from the center of the reinforcing patterns 123 and 124 in the third direction toward both ends of the reinforcing patterns 123 and 124 in the third direction.

Referring to FIG. 9, the reinforcing patterns 123 and 124 may be disposed to be in contact with the third surface 3 and the fourth surface 4, which are surfaces of the body 110 facing in the second direction, may be spaced apart from each other in the second direction, respectively, and may have a shape in which the length in the second direction gradually increases from the center in the third direction to both ends in the third direction. Here, in an exemplary embodiment, the reinforcing patterns 123 and 124 may not overlap the capacitance formation portion Ac in the first direction.

In addition, referring to FIG. 9, the reinforcing patterns 123 and 124 may be formed continuously in the third direction, and the reinforcing patterns 123 and 124 may be in contact with the fifth surface 5 and the sixth surface 6, which are surfaces facing in the third direction of the body 110. Accordingly, since the thickness of the external electrodes disposed in the region adjacent to the corner of the body 110 may be formed to be sufficiently thick, the moisture resistance reliability of the multilayer electronic component 100 may be further improved.

Referring to FIG. 9, the maximum length of the body 110 in the second direction may be denoted as L, the maximum length of the reinforcing patterns 123 and 124 in the second direction may be denoted as L1, an average length of the length-margin portion in the second direction may be denoted as LM, the length of the reinforcing patterns 123 and 124 closest to the capacitance formation portion Ac in second direction may be denoted as L2, and the minimum length of the reinforcing patterns 123 and 124 in the second direction may be denoted as L3.

Here, in an exemplary embodiment, L1 ≤ 0.22L may be satisfied. Accordingly, even when the external electrodes are formed to extend to the fifth surface 5 or the sixth surface 6, the connectivity between the external electrodes 130 and 140 and the body 110 may be improved, and since the external electrodes 130 and 140 having a sufficient thickness may be formed at the corner connecting the third surface 3 and the fifth surface 5 and the sixth surface 6 or the corner connecting the fourth surface 4 and the fifth surface 5 and the sixth surface 6, so that the moisture resistance reliability of the multilayer electronic component 100 may be further improved. Meanwhile, the reinforcing patterns 123 and 124 have a form in which the length in second direction gradually increases from the center in third direction to both ends in the third direction, and thus, L2 ≤ L1 may be satisfied.

In addition, in an exemplary embodiment, L2 ≤ 0.95LM may be satisfied. If L2 exceeds 0.95 LM and if distortion occurs during the stacking and compressing process of the internal electrodes 121 and 122 and the reinforcing patterns 123 and 124, the reinforcing patterns 123 and 124 may overlap the capacitance formation portion Ac, thereby deteriorating the reliability of the multilayer electronic component 100. Accordingly, in an exemplary embodiment, by satisfying L2 ≤ 0.95LM, the overlapping of the reinforcing patterns 123 and 124 and the capacitance formation portion Ac in the first direction may be prevented. Meanwhile, since the reinforcing patterns 123 and 124 have a form in which the length in the second direction gradually increases from the center in the third direction to both ends in the third direction, L3 ≤ L2 may be satisfied.

In addition, in an exemplary embodiment, 0.05 LM ≤ L3 ≤ 0.5 LM may be satisfied. If L3 is less than 0.05 LM, the size of the reinforcing patterns 123 and 124 in the second direction may become excessively small, which may result in a decrease in the connectivity between the external electrodes 130 and 140 and the body 110, and if L3 exceeds 0.5 LM, the capacitance formation portion Ac and the reinforcing patterns 123 and 124 may overlap in the first direction, making it difficult to secure the effect of alleviating a step difference. Accordingly, in an exemplary embodiment, by adjusting to satisfy 0.05 LM ≤ L3 ≤ 0.5 LM, the connectivity between the external electrodes 130 and 140 and the body 110 may be improved and the effect of alleviating a step difference may be secured.

Meanwhile, in an exemplary embodiment, at least two of the condition satisfying L2 ≤ L1 ≤ 0.22L, the condition satisfying L3 ≤ L2 ≤ 0.95 LM, and the condition satisfying 0.05 LM ≤ L3 ≤ 0.5 LM may be satisfied, and accordingly, the effect of improving the connectivity between the external electrodes 130 and 140 and the body 110 and the effect of alleviating a step difference in the multilayer electronic component 100 may be further improved.

The method of measuring the LM, L1, L2, and L3 is not particularly limited. In FIG. 9, each dimension is shown in the cross-section in the second direction and third direction for convenience of description, but the present disclosure is not limited thereto, and LM, L1, L2, and L3 may be measured in the cross-section in the first direction and second direction polished to a specific point of the multilayer electronic component 100 in the third direction.

Specifically, in the case of L1, after the multilayer electronic component 100 is polished in the third direction so that the fifth surface 5 is exposed, L1 may be measured as a length of the end of the exposed reinforcing patterns 123 and 124 in the second direction. Meanwhile, in a case in which a plurality of reinforcing patterns 123 and 124 are formed, an average value of values measured in two or more layers may be taken.

In addition, L2 may be measured as a length of the end of the exposed reinforcing patterns 123 and 124 in the second direction in the cross-section in the first direction and the second direction exposing a cross-section of the capacitance formation portion Ac in the third direction by polishing the multilayer electronic component 100 in the third direction. Meanwhile, in a case in which the plurality of reinforcing patterns 123 and 124 are formed, an average value of values measured in two or more layers may be taken.

In addition, L3 may be measured as a length of the end of the exposed reinforcing patterns 123 and 124 in the second direction in the cross-section in the first direction and the second direction after polishing the multilayer electronic component 100 to the center portion in the third direction. Meanwhile, when a plurality of reinforcing patterns 123 and 124 are formed, an average value of values measured in two or more layers may be taken.

In addition, LM may be measured as a length in the second direction in which the second internal electrode 122 and the third surface 3 are spaced apart in the cross-section in the first direction and the second direction after polishing the multilayer electronic component 100 to the center portion in the third direction. Meanwhile, LM may be a value obtained by averaging values measured at three or more points at equal intervals in the first direction.

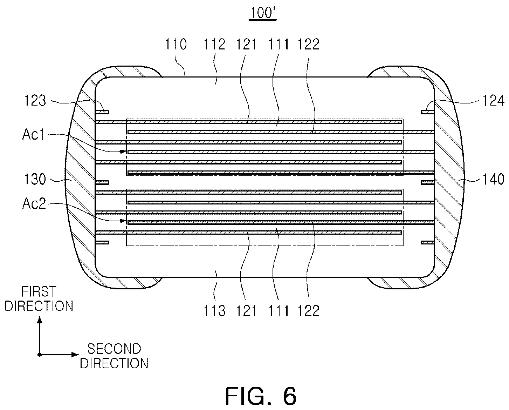

FIG. 6 is a cross-sectional view taken along line II-II' of FIG. 1 in a multilayer electronic component according to an exemplary embodiment.

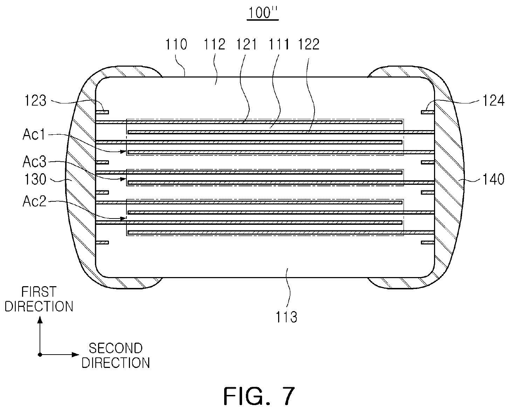

FIG. 7 is a cross-sectional view taken along line II-II' of FIG. 1 in a multilayer electronic component according to an exemplary embodiment.

Referring to FIG. 6, a capacitance formation portion of a multilayer electronic component 100' according to an exemplary embodiment may include a first capacitance formation portion Ac1 adjacent to one surface of the body 110 in the first direction and a second capacitance formation portion Ac2 adjacent to the other surface of the body 110 in the first direction. Here, in an exemplary embodiment, the reinforcing patterns 123 and 124 may also be disposed between the first capacitance formation portion Ac1 and the second capacitance formation portion Ac2.

Referring to FIG. 7, a capacitance formation portion of a multilayer electronic component 100" according to an exemplary embodiment may include a first capacitance formation portion Ac1 adjacent to one surface of the body 110 in the first direction, a second capacitance formation portion Ac2 adjacent to the other surface of the body 110 in the first direction, and a third capacitance formation portion Ac3 disposed between the first capacitance formation portion Ac1 and the second capacitance formation portion Ac2. Here, in an exemplary embodiment, the reinforcing patterns 123 and 124 may be disposed between the first capacitance formation portion Ac1 and the third capacitance formation portion Ac3 and between the third capacitance formation portion Ac3 and the second capacitance formation portion Ac2. Through this, a connection surface with the external electrodes 130 and 140 is formed not only between the upper and lower portions of the capacitance formation portion but also between a plurality of capacitance formation portions, thereby further improving the moisture resistance reliability of the multilayer electronic component 100".

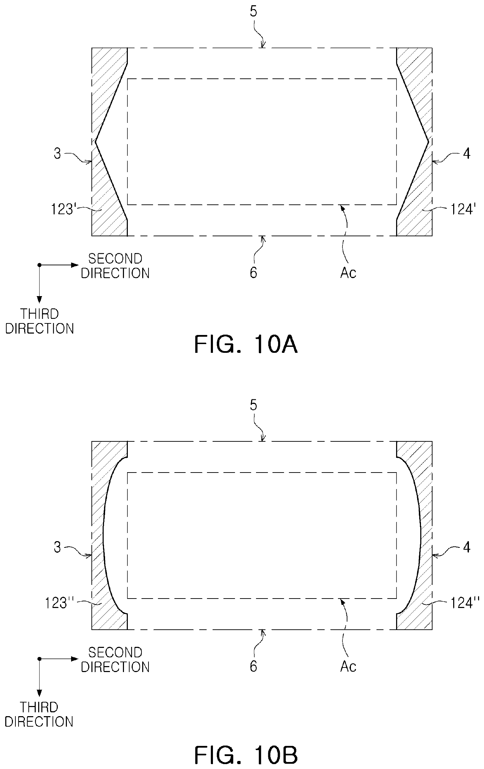

FIGS. 10A and 10B are plan views illustrating a structure of a reinforcing pattern according to an exemplary embodiment.

Referring to FIG. 10A, reinforcing patterns 123' and 124' according to an exemplary embodiment may have substantially the same length in the second direction in a region beyond the cross-section of the capacitance formation portion Ac in the third direction. In one or more aspects, the term "substantially the same" ("about," "approximately," etc.) may indicate "being the same" or being within an industry-accepted tolerance, due to a process error or a measurement error recognizable by one of ordinary skill in the art provide, for the corresponding term and/or relativity between items, such as a tolerance of ± 1%, ± 5%, or ± 10% of the actual value stated, and other suitable tolerances. In this case, it may be advantageous to form the reinforcing patterns 123' and 124' not to be exposed in a multilayer electronic component in which a band portion of the external electrode is formed to be short.

Referring to FIG. 10B, side surfaces of the reinforcing patterns 123" and 124" according to an exemplary embodiment facing the capacitance formation portion may have a rounded shape. Accordingly, even if printing blur or clumping occurs during printing, stacking, compressing, and sintering processes, the phenomenon in which the reinforcing patterns 123" and 124" and the capacitance formation portion Ac overlap in the first direction may be effectively prevented. Here, the side surfaces of the reinforcing pattern 123" and 124" facing the capacitance formation portion Ac may refer to the side surfaces of the reinforcing pattern 123" and 124" that are not in contact with the surface of the body 110.

One of the various effects of the present disclosure is to improve the moisture resistance reliability of the multilayer electronic component by forming the reinforcing patterns on one surface and the other surface of the capacitance formation portion in the first direction and adjusting the shape thereof.

One of the various effects of the present disclosure is to reduce a step difference of the multilayer electronic component and suppress the clumping of the central portion of the internal electrode by forming the reinforcing patterns to be spaced apart from each other in the second direction and contact the surfaces of the body facing each other in the second direction and to gradually increase in the length in the second direction toward both ends thereof in the third direction from the center portion thereof in the third direction.

Although the exemplary embodiments of the present disclosure have been described in detail above, the present disclosure is not limited to the exemplary embodiments described above and the accompanying drawings, but is intended to be limited by the appended claims. Accordingly, various forms of substitution, modification, and change may be made by those skilled in the art within the scope without departing from the technical idea of the present disclosure described in the claims, and this will also be considered to fall within the scope of the present disclosure.

The expression "an exemplary embodiment or one example" used in the present disclosure does not refer to identical examples and is provided to stress different unique features between each of the examples. However, examples provided in the following description are not excluded from being associated with features of other examples and implemented thereafter. For example, even if matters described in a specific example are not described in a different example thereto, the matters may be understood as being related to the other example, unless otherwise mentioned in descriptions thereof.

The terms used herein are for the purpose of describing particular exemplary embodiments only and are not intended to limit the exemplary embodiments. As used herein, the singular forms "a," "an" and "the" are intended to include the plural forms as well, unless the context clearly indicates otherwise.

## Claims

1. A multilayer electronic component comprising:
a body including a plurality of dielectric layers, a first internal electrode, a second internal electrode, and a reinforcing pattern; and
an external electrode disposed on the body,
wherein the first and second internal electrodes are disposed alternately with the dielectric layer therebetween in a first direction, and
when a region of the body in which the first and second internal electrodes overlap in the first direction is a capacitance formation portion, the reinforcing pattern is disposed on one surface and the other surface of the capacitance formation portion in the first direction,
when a direction, perpendicular to the first direction, is a second direction, and a direction, perpendicular to the first direction and the second direction, is a third direction, the reinforcing pattern is disposed to contact a surface of the body in the second direction and is spaced apart from each other in the second direction, and
when the reinforcing pattern includes four parts in the third direction from one end of the reinforcing pattern in the third direction to the other end of the reinforcing pattern in the third direction, a length of the reinforcing pattern at a 1/4 point in the second direction is greater than a length of the reinforcing pattern at a 1/2 point in the second direction and a length of the reinforcing pattern at a 3/4 point in the second direction is greater than the length of the reinforcing pattern at the 1/2 point in the second direction.

2. The multilayer electronic component of claim 1, wherein the reinforcing pattern does not overlap the capacitance formation portion in the first direction.

3. The multilayer electronic component of claim 1, wherein L1 ≤ 0.22L, in which L is a maximum length of the body in the second direction and L1 is a maximum length of the reinforcing pattern in the second direction.

4. The multilayer electronic component of claim 1, wherein L2 ≤ 0.95LM, in which a region between a cross-section of the capacitance formation portion in the second direction and the surface of the body in the second direction is a length-margin portion, LM is an average length of the length-margin portion in the second direction, and L2 is a length of the reinforcing pattern closest to the capacitance formation portion in the second direction.

5. The multilayer electronic component of claim 1, wherein 0.05LM ≤ L3 ≤ 0.5LM, in which a region between a cross-section of the capacitance formation portion in the second direction and the surface of the body in the second direction is a length-margin portion, LM is an average length of the length-margin portion in the second direction, and L3 is a minimum length of the reinforcing pattern in the second direction.

6. The multilayer electronic component of claim 1, wherein L2 ≤ L1 ≤ 0.22 L, L3 ≤ L2 ≤ 0.95 LM, 0.05 LM ≤ L3 ≤ 0.5 LM, in which a region between a cross-section of the capacitance formation portion in the second direction and the surface of the body in the second direction is a length-margin portion, L is a maximum length of the body in the second direction, LM is an average length of the length-margin portion in the second direction, L1 is a maximum length of the reinforcing pattern in the second direction, L2 is a size of a portion of the reinforcing pattern closest to the capacitance formation portion, and L3 is a minimum length of the reinforcing pattern in the second direction.

7. The multilayer electronic component of claim 1, wherein the reinforcing pattern is in contact with one surface and the other surface of the body in the third direction.

8. The multilayer electronic component of claim 1, wherein the capacitance formation portion includes a first capacitance formation portion adjacent to one surface of the body in the first direction and a second capacitance formation portion adjacent to the other surface of the body in the first direction, and the reinforcing pattern is also disposed between the first capacitance formation portion and the second capacitance formation portion.

9. The multilayer electronic component of claim 1, wherein the reinforcing patterns have the substantially same length in the second direction in a region beyond a cross-section of the capacitance formation portion in the third direction.

10. The multilayer electronic component of claim 1, wherein the reinforcing pattern is concave in the second direction.

11. The multilayer electronic component of claim 1, wherein a side surface of the reinforcing pattern facing the capacitance formation portion is round in shape.

12. The multilayer electronic component of claim 1, wherein the reinforcing pattern is disposed in plural on the one surface and the other surface of the capacitance formation portion in the first direction.

13. The multilayer electronic component of claim 1, wherein the reinforcing pattern includes one or more of nickel (Ni), copper (Cu), palladium (Pd), silver (Ag), gold (Au), platinum (Pt), tin (Sn), tungsten (W), titanium (Ti), and alloys thereof.

14. The multilayer electronic component of claim 1, wherein a length of the reinforcing pattern, in the second direction, decreases from an edge portion of the reinforcing pattern towards a central portion of the reinforcing pattern in the third direction.
